# EUROPÄISCHE PATENTSCHRIFT

(11) **EP 1 351 005 B1**
(45) Veröffentlichungstag und Bekanntmachung des Hinweises auf die Patenterteilung: **14.09.2005**
(21) Anmeldenummer: 02015824.2
(22) Anmeldetag: 16.07.2002
(51) Int. Cl.: F16L 33/08

(54) **Schneckengewindeschelle**
Worm drive clamp
Collier de serrage à vis tangente

(30) Priorität: 03.04.2002 DE 10214663
(43) Veröffentlichungstag der Anmeldung: 08.10.2003
(73) Patentinhaber: Rasmussen GmbH, 63477 Maintal (DE)
(72) Erfinder: Keller, Werner, 63477 Maintal (DE); Mann, Stephan, 63599 Bieber (DE); Redemann, Hartmut, 63454 Hanau (DE); Stichel, Willi, 63477 Maintal (DE)
(74) Vertreter: Knoblauch, Andreas

(56) Entgegenhaltungen:
- EP-A- 1 158 235
- DE-C- 19 633 435
- DE-U- 9 419 543
- US-A- 3 950 830

## Beschreibung

Die Erfindung bezieht sich auf eine Schneckengewindeschelle mit einem Spannband, einem Gehäuse und einer einen Kopf und einen Gewindeschaft aufweisenden Spannschraube, wobei das Spannband sich überlappende Endabschnitte aufweist, von denen der radial äußere mit Gewindeelementen versehen ist, die mit dem Gewindeschaft in Eingriff stehen, und der radial innere Endabschnitt mit einem Boden des die Endabschnitte und den Gewindeschaft der Spannschraube umgebenden Gehäuses, das die Spannschraube in beiden Umfangsrichtungen der Schelle abstützt, formschlüssig verbunden ist, wobei das Gehäuse aus einem Gehäuseband besteht, dessen Enden im Bereich des Bodens eine Stoßfuge begrenzen und miteinander durch ineinandergreifende Hinterschneidungen ihrer die Stoßfuge begrenzenden Ränder verbunden sind, wobei der Boden des Gehäuses an seinem dem Spannschraubenkopf zugekehrten Rand beiderseits der Stoßfuge je eine von zwei radial nach außen umgebogenen Zungen aufweist, die gemeinsam in eine Öffnung im radial inneren Endabschnitt des Spannbands ragen.

Bei einer bekannten Schneckengewindeschelle dieser Art (DE 196 33 435 C1) ist auf seiten jedes Querrands des Gehäusebodens nur eine Öffnung in einer sich quer zum Band erstreckenden, radial nach außen gedrückten Kröpfung (Nut) des Spannbands ausgebildet. An jedem Querrand sind zwei Zungen vorgesehen, die, seitlich aneinander anliegend, in dieselbe Öffnung in jeweils einer Seitenwand der Kröpfung eingreifen. Die Zungen sollen ein Aufspreizen der Stoßfuge von einem mittleren Bereich aus, in dem die Ränder der Stoßfuge formschlüssig verbunden sind, zu dem jeweiligen Querrand des Gehäusebodens hin verhindern. Die Zungen verhindern darüber hinaus, daß sich das Gehäuse vor dem Einführen der Spannschraube in das Gehäuse vom Spannband löst und dann das Einführen der Spannschraube erschwert. Allerdings ist das Einführen der an dem dem Spannschraubenkopf abgekehrten Querrand des Gehäusebodens ausgebildeten Zungen in ihre gemeinsame Öffnung ebenfalls schwierig. Dieser Querrand stützt sich an den seitlich neben seinen Zungen liegenden Randabschnitten der zugehörigen Öffnung ab und wird daher nur an zwei Stellen beim Spannen des Schellenbands abgestützt, was in vielen Fällen bei hohen Spannkräften nicht ausreichend ist. Darüber hinaus besteht die Gefahr, daß die axialen Seitenwände der Abkröpfung bei sehr hohen Spannkräften auseinandergezogen werden und die Abkröpfung sich wieoder in die Ebene des Spannbands zurückverformt. Gegebenenfalls greifen die Zungen an dem dem Spannschraubenkopf abgekehrten Querrand des Gehäusebodens nicht mehr in die zugeordnete Öffnung ein. Darüber hinaus erhöht die Abkröpfung den radialen Abstand des Schraubenschaftes von dem mittels der Schelle auf einem Rohr festzuklemmenden Schlauch, wodurch sich das auf die Kröpfung ausgeübte Rückverformungs-Biegemoment erhöht. Dennoch hält die bekannte Schelle relativ hohen Spannkräften stand. Dies kann dazu führen, daß eine Bedienungsperson versucht, die Spannung immer weiter zu erhöhen, um den Schlauch möglichst fest zu klemmen. Dies kann dann dazu führen, daß das Schellenband in dem durch die mit dem Schraubengewinde zusammenwirkenden, in das Schellenband geprägten Gewindeelementen versehenen Bereich beschädigt wird oder sogar reißt.

Eine gattungsbildende Scheckengewindeschelle ist aus EP 1 158 235 A bekannt.

Der Erfindung liegt die Aufgabe zugrunde, eine Schnekkengewindeschelle der eingangs genannten Art anzugeben, die weiterhin zwar hoch belastbar ist, sich leicht montieren läßt und dennoch die Gefahr einer Überbeanspruchung beim Spannen weitgehend vermeidet, aber eine dichte Verbindung zwischen einem Rohr oder dergleichen und einem mittels der Schelle auf dem Rohr befestigten Schlauch sicherstellt.

Erfindungsgemäß ist diese Aufgabe dadurch gelöst, daß an der den Zungen gemeinsamen Öffnung auf Seiten des Spannschraubenkopfes eine zu dem Boden hin offene Sicke im Spannband angrenzt, an der sich der Boden abstützt, daß der innere Endabschnitt des Spannbands frei von einer radial nach außen gerichteten Kröpfung zur Aufnahme des Bodens ist, daß sich die Sicken in Umfangsrichtung der Schelle erstrecken und die radial innere Kante jeder Sicke mit der Unterseite des Bodens fluchtet und stetig in die Innenseite des radial inneren Endabschnitts übergeht.

Bei dieser Lösung kommt man ohne die Zungen an dem dem Spannschraubenkopf abgekehrten Querrand des Gehäusebodens aus, so daß nicht nur deren Ausbildung entfällt, sondern auch das Einhängen des Gehäuses im radial inneren Endabschnitt des Schellenbands vereinfacht wird. Da dieser Querrand beim Spannen am stärksten belastet wird, wird er bei zwei diesen Querrand abstützenden Sicken an vier Stellen durch die Öffnungsränder der Sicken abgestützt, so daß im Vergleich zu nur einer Sicke sich die Belastbarkeit dieses Querrandes aufgrund der geringeren Flächenpressung verdoppelt. Der Wegfall der bislang den Gehäuseboden aufnehmenden nutenartigen Kröpfung im radial inneren Endabschnitt des Spannbands hat den Vorteil, daß eine Bandlängung aufgrund einer Rückverformung einer Kröpfung beim Spannen des Spannbands entfällt und somit die in die kopfseitige Öffnung des Spannbands eingreifenden beiden Zungen ihre Lage in der Öffnung sicher beibehalten und eine Aufspreizung des Gehäusebodens bei zu hohen Spannkräften verhindern, da sie sich stets seitlich am Rand ihrer gemeinsamen Öffnung im Spannband abstützen. Trotz des Wegfalls der Kröpfung stellen die Sicken sicher, daß zwischen dem Gehäuseboden und der Innenseite des radial inneren Endabschnitts des Spannbands ein stufenloser Übergang vorhanden ist, der einen gegebenenfalls in radialer Richtung auftretenden Spannkraftabfall, wie er bei einem abgestuften Übergang auftreten würde, verhindert, so daß die Schelle auch im Bereich der Querränder des Gehäusebodens einen gleichmäßigen radialen Druck auf den Schlauch ausübt und die Verbindung zwischen Schlauch und Rohr in diesem Bereich dicht bleibt. Der Wegfall der Kröpfung hat den weiteren Vorteil, daß der Schraubenschaft einen entsprechend geringeren Abstand vom Schlauch hat und die Gefahr einer Verformung des Spannbands aufgrund eines zu hohen Biegemoments über eine gegebenenfalls vorhandene Kröpfung entfällt.

Vorzugsweise ist dafür gesorgt, daß das Spannband in seiner radial äußeren Seite eine Reihe schräg zur Längsrichtung des Spannbands verlaufender paralleler Rillen als Gewindeelemente für den Eingriff des Gewindes der Spannschraube aufweist und seine radial innere Seite eben bis leicht gewellt ist, wobei die maximale Höhe der Wellung bis zu 60% der maximalen Bodendicke der Gewindeelemente beträgt. Bei dieser Ausbildung verringert sich die radiale Höhe des Gehäuses gegenüber einer Ausbildung des Spannbandes, bei der die im radial äußeren Endabschnitt des Spannbands ausgebildeten Gewindeelemente gleichermaßen auf der radial inneren Seite dieses Endabschnitts vorstehen. Dementsprechend verringert sich das Spiel zwischen dem Gewindeschaft der Spannschraube und dem radial inneren Endabschnitt des Spannbands, wenn die Schelle geöffnet ist, wobei der radial äußere Endabschnitt des Spannbands außerhalb des Gehäuses liegt. Dadurch verhindert die weiterhin im Gehäuse formschlüssig gehaltene Spannschraube durch Anlage am radial inneren Endabschnitt des Spannbands eine Verschwenkung des Gehäuses in Umfangsrichtung bis zu einer Schwenkwinkellage, in der die Zungen mit ihrer gemeinsamen Öffnung außer Eingriff kämen und sich das Gehäuse vom Schellenband lösen würde. Wenn die Höhe der Wellung auf der Innenseite des radial äußeren Endabschnitts des Spannbands nahezu Null ist, tritt zwischen dieser Wellung und dem eingespannten Schlauch praktisch keine Reibung auf. Andererseits verhindert schon eine relativ geringe Wellung im Bereich der die Gewindeelemente bildenden Rillen, daß das Spannband in den Rillen beim Prägen zu dünn wird und dort reißt oder bricht. Die Wellung ermöglicht ferner die Beibehaltung einer etwas größeren Bodendicke im Bereich der Rillen zwischen den Gewindestegen, was zur Erhöhung der Standzeit des zur Ausbildung der Gewindeelemente im Spannband verwendeten Prägewerkzeugs beiträgt.

Eine Vorteilhafte Ausgestaltung besteht ferner darin, daß die beim Spannen des Spannbands aneinandergepreßten Flanken der Gewindeelemente des Spannbands und des Gewindestegs der Spannschraube an ihren äußeren und inneren Enden mit Radien versehen sind und ihre Flankensteilheit bei gestrecktem Spannband etwa 90° entspricht, und daß die übrigen Flanken der Gewindeelemente und des Gewindestegs an ihren Enden mit größeren Radien als die Enden der aneinandergepreßten Flanken versehen sind und eine geringere Flankensteilheit als die aneinandergepreßten Flanken haben. Diese Formgebung der Gewindeelemente des Spannbands einerseits und des Gewindestegs der Spannschraube andererseits ergibt eine höhere Belastbarkeit der Gewindeelemente und des Gewindestegs. So greifen die Gewindeelemente und der Gewindesteg über eine längere und dadurch größere radiale Fläche mit entsprechend geringerer Flächenpressung ineinander, und der entsprechend komplementär geformte Prägestempel hat eine höhere Standzeit.

Dies kann noch weiter dadurch verbessert werden, wenn die Radien an den Enden der beim Spannen der Spannschraube aneinandergepreßten Flanken weitgehend gleich sind und bei den übrigen Flanken der Radius am freien Ende der Flanken der Gewindeelemente kleiner als der Radius an den Fußenden und am freien Ende der Flanke des Gewindestegs der Radius größer als der Radius am Fußende ist.

Ferner kann dafür gesorgt sein, daß das Gehäuse nur auf seiner, bei oberhalb des Spannbands liegender Spannschraube in Richtung vom Kopf zum Schaft der Spannschraube gesehen, rechten Seite einen seitlichen Ausleger aufweist, dessen Wand radial außerhalb des radial äußeren Endabschnitts des Spannbands neben dem freien Ende des Spannschraubenschafts einen von einem gewölbten First des Oberteils des Gehäuses tangential zu einem radialen Wandteil des Auslegers schräg abfallenden Wandteil und neben einem mittleren Abschnitt des Spannschraubenschafts einen an diesem anliegenden gewölbten Wandteil und einen den gewölbten Wandteil mit dem radialen Wandteil verbindenden axialen Wandteil aufweist. Dieser Ausleger verhindert ein seitliches Umkippen des Gehäuses in Drehrichtung der Spannschraube. Sein gewölbter Wandteil trägt zur Führung der Spannschraube tangential zur Schelle bei. Der schräg abfallende Wandteil verhindert eine Aufweitung des gewölbten und des axialen Wandteils beim Spannen. Gleichzeitig verringert der schräg abfallende Wandteil die Berührungsfläche zwischen dem Gewinde des Gewindeschafts der Spannschraube und der Wand des Gehäuses, so daß das Gewinde im Bereich des schräg abfallenden Wandteils einer geringeren Abnutzung unterliegt. Die Spannschraube läßt sich daher auch nach mehrmaliger Betätigung bzw. Umdrehung weiterhin leicht drehen. Dementsprechend bleibt das zum Spannen der Spannschraube erforderliche Drehmoment über eine längere Benutzungsdauer gering.

Der gewölbte Wandteil und der axiale Wandteil können durch Eindrückung der Seitenwand des Gehäuses gebildet sein, so daß ein quer zur Spannschraube verlaufender Wandteil zwischen dem schräg abfallenden Wandteil, dem gewölbten Wandteil und dem axialen Wandteil verbleibt. Dies ergibt eine hohe Steifigkeit der Seitenwand des Auslegers gegen eine Aufweitung.

Vorzugsweise kreuzt die Ebene des quer verlaufenden Wandteils etwa die Mitte des mit dem Spannband in Gewindeeingriff stehenden Abschnitts der Spannschraube. Im Bereich der Mitte des mit dem Spannband in Gewindeeingriff stehenden Abschnitts der Spannschraube unterliegt das Gehäuse besonders hohen Kräften, die bestrebt sind, das Gehäuse aufzuweiten. In der genannten Lage wirkt der querverlaufende Wandteil einer solchen Aufweitung in besonders hohem Maße entgegen.

Ferner kann der dem Kopf der Spannschraube zugekehrte freie Rand des Oberteils des Gehäuses mit Zähnen versehen sein, an denen eine quer zur Schraubenachse stehende radiale Fläche des Kopfes anliegt. Bei Überschreiten einer Obergrenze der Spannkraft ergibt sich hierbei eine Verformung der Kanten der Zähne und der radialen Fläche des Kopfes, so daß sich die Spannschraube mit stark ansteigender Reibung weiter drehen und mithin die Schelle nur noch wenig weiter spannen läßt. Dadurch wird eine Überbelastung der Schelle, bei der möglicherweise das Spannband reißen würde, verhindert.

Sodann kann dafür gesorgt sein, daß der Boden des Gehäuses in Umfangsrichtung der Schelle eine Krümmung aufweist, deren Krümmungsradius dem des Umfangs eines mittels der Schelle auf einem Rohr festgeklemmten Schlauches weitgehend entspricht, daß der Boden in der Umfangsrichtung kürzer als das Oberteil des Gehäuses ist und eine solche Lage relativ zum freien Ende der Spannschraube hat, daß die größtmögliche Anzahl von Gewindeabschnitten der Spannschraube mit (den) im Spannband eingeprägten Gewindeelementen in Eingriff steht. Bei dieser Ausbildung wird auch eine Überbelastung einzelner Gewindeabschnitte der Spannschraube und/oder Gewindeelemente des Spannbands vermieden.

Außerdem ist es günstig, wenn der Abstand der die Zungen aufnehmenden Öffnung von dem, vom Kopf zum Schaft der Spannschraube gesehen, rechts von der Spannschraube liegenden Rand des Spannbands kleiner als der Abstand der Öffnung vom gegenüberliegenden Rand des Spannbands ist. Der in Richtung vom Spannschraubenkopf zum Spannschraubenschaft gesehen linke Steg zwischen dem linken Längsrand der Öffnung und dem linken Rand des Spannbands wird beim Spannen des Spannbands stärker als der gegenüberliegende Steg beansprucht und erhält aufgrund der exzentrischen Lage der Öffnung einen größeren und dementsprechend stärker belastbaren Querschnitt als der gegenüberliegende, die Öffnung begrenzende Steg.

Sodann kann der dem Kopf der Spannschraube zugekehrte Rand des Gehäusebodens zu den Zungen und in Richtung zum Kopf schräg vorstehen. Dadurch wird die Scherwirkung der Kante dieses Randes des Gehäusebodens auf das Spannband im Vergleich zu einem senkrecht zur Umfangsrichtung des gekrümmten Spannbands verlaufenden Rand vermindert.

Die Erfindung und ihre Weiterbildungen werden nachstehend anhand der beiliegenden Zeichnungen eines bevorzugten Ausführungsbeispiels näher beschrieben. Darin stellen dar:
- Fig. 1: eine Seitenansicht einer erfindungsgemäßen Schneckengewindeschelle im geöffneten Zustand,
- Fig. 2: eine weitere Seitenansicht der erfindungsgemäßen Schneckengewindeschelle in einer gegenüber der Lage nach Fig. 1 um 90° gedrehten Lage,
- Fig. 3: den Schnitt III-III der Fig. 1,
- Fig. 4: den Schnitt IV-IV der Fig. 1,
- Fig. 5: den Schnitt V-V der Fig. 2,
- Fig. 6: die gleiche Schnittansicht wie die nach Fig. 5, jedoch im geschlossenen Zustand der Schelle,
- Fig. 7: eine perspektivische Ansicht der erfindunggemäßen Schelle im geöffneten Zustand und größeren Maßstab,
- Fig. 8: den in Fig. 7 eingekreisten Ausschnitt der erfindungsgemäßen Schelle in vergrößertem Maßstab,
- Fig. 9: eine perspektivische Ansicht des Gehäuses der erfindungsgemäßen Schneckengewindeschelle,
- Fig. 10: eine Vorderansicht des Gehäuses nach Fig. 9 in kleinerem Maßstab,
- Fig. 11: eine Unteransicht des Gehäuses nach Fig. 10,
- Fig. 12: eine Seitenansicht des Gehäuses nach Fig. 10 von rechts,
- Fig. 13: eine Seitenansicht des Gehäuses nach Fig. 10 von links,
- Fig. 14: eine Draufsicht des Gehäuses nach Fig. 10,
- Fig. 15: eine perspektivische Ansicht des Spannbands der erfindungsgemäßen Schneckengewindeschelle,
- Fig. 16: eine Seitenansicht des Spannbands,
- Fig. 17: den eingekreisten Ausschnitt des Spannbands nach Fig. 15 in vergrößertem Maßstab,
- Fig. 18: eine Unteransicht eines Endabschnitts des Spannbands der erfindungsgemäßen Schneckengewindeschelle,
- Fig. 19: einen Axialschnitt durch den Verschluß der erfindungsgemäßen Schneckengewindeschelle in einem aufgebrochenen Bereich des Gehäuses,
- Fig. 20: den Axialschnitt der Fig. 19 in vergrößertem Maßstab,
- Fig. 21: eine separate Darstellung eines Teils der Fig. 20 und
- Fig. 22: den gleichen Ausschnitt wie den in Fig. 21 dargestellten, bei dem jedoch die radial innere Seite des äußeren Endabschnitts des Spannbands leicht gewellt ist.

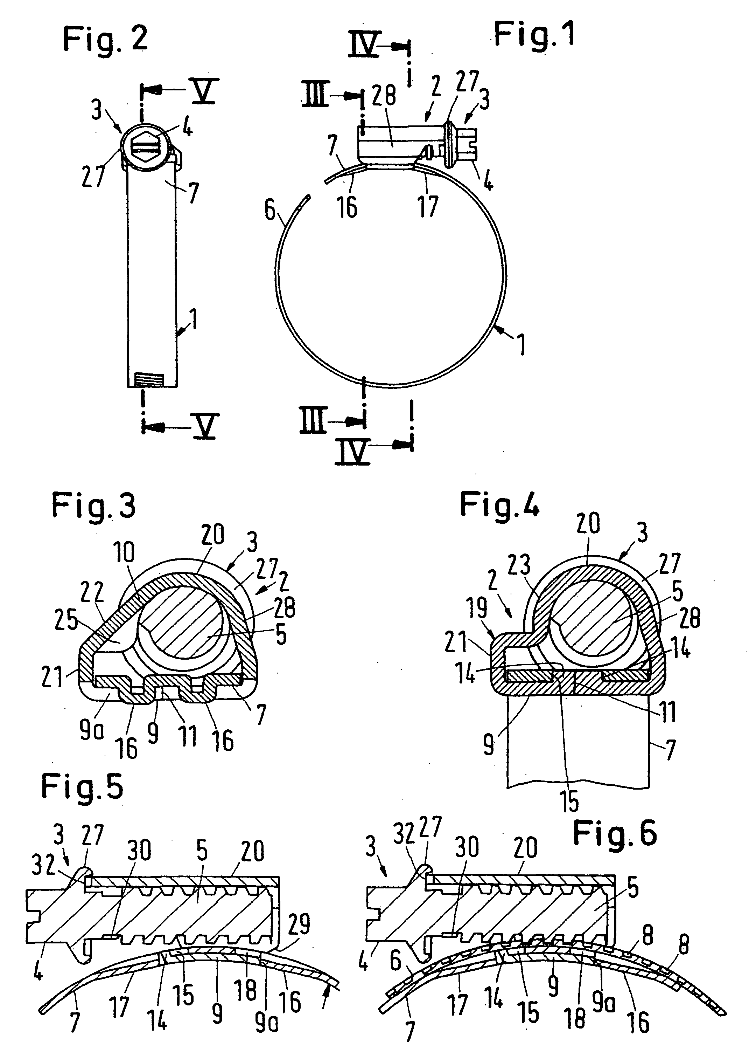

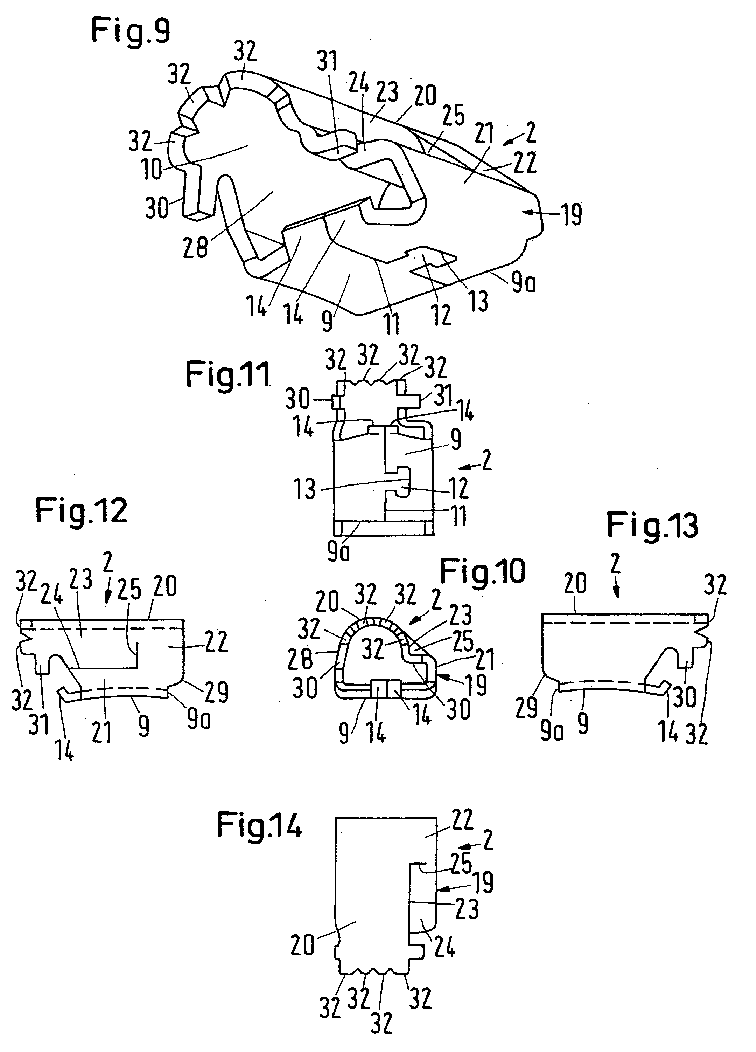

Die dargestellte Schneckengewindeschelle besteht aus einem Spannband 1, einem Gehäuse 2 und einer rechtsgängigen Spannschraube 3 mit einem Kopf 4 und einem Gewindeschaft 5. Das Spannband 1 hat sich in Umfangsrichtung der geschlossenen Schneckengewindeschelle (Fig. 6) überlappende Endabschnitte 6 und 7, von denen der radial äußere Endabschnitt 6 mit Gewindeelementen 8 in Form etwa axialer, in das Spannband 1 geprägter Rillen versehen ist, die mit dem Gewinde des Gewindeschafts 5 in Eingriff stehen. Der radial innere Endabschnitt 7 ist mit einem Boden 9 des die Endabschnitte 6, 7 und den Gewindeschaft 5 umgebenden Gehäuses 2 formschlüssig verbunden. Das Gehäuse 2 stützt die Spannschraube 3 in beiden Umfangsrichtungen der Schelle ab und besteht aus einem Gehäuseband 10, dessen Enden im Bereich des Bodens 9 längs einer Stoßfuge 11 (Fig. 4, 9, 10 und 11) formschlüssig verbunden sind. Die formschlüssige Verbindung ist durch ineinandergreifende Hinterschneidungen der die Stoßfuge 11 begrenzenden Ränder des Gehäusebandes 10 gebildet. Die ineinandergreifenden Hinterschneidungen bestehen einerseits aus einem hammerkopfförmigen Fortsatz 12 am einen Ende des Gehäusebandes 10 und andererseits aus einer dem Fortsatz angepaßten hammerkopfförmigen Aussparung 13 im anderen Ende des Gehäusebands 10 (Fig. 9 und 11). Anstelle der Hammerkopf-Verbindung 12, 13 kann auch eine Schwalbenschwanz-Verbindung vorgesehen sein.

Der Boden 9 des Gehäuses 2 hat an seinem einen Querrand, der dem Kopf 4 der Spannschraube 3 zugekehrt ist, beiderseits der Stoßfuge 11 jeweils eine von zwei radial nach außen gebogenen Zungen 14, die gemeinsam durch eine Öffnung 15 im radial inneren Endabschnitt 7 des Spannbands 1 ragen (Fig. 4 bis 6). Ferner ragt dieser Querrand schräg nach vorn in Richtung zum Spannschraubenkopf 4 (Fig. 11). Dadurch wird die mit der gekrümmten Innenseite des Endabschnitts 7 beim Spannen der Schelle unter erhöhtem Liniendruck in Berührung kommende Kante des dem Schraubenkopf 4 zugekehrten Querrandes im Vergleich zu einem genau axial verlaufenden Querrand etwas verlängert und dementsprechend ihre Scherwirkung auf das Spannband 1 vermindert, so daß das Spannband 1 höheren Spannkräften standhält, ohne zu zerreißen. Der andere Querrand 9a des Bodens 9 des Gehäuses 12 ist durchgehend geradlinig und stützt sich an zu diesem Querrand 9a hin offenen, radial nach innen aus dem Spannband 1 herausgedrückten Sicken 16 ab. An der den Zungen 14 gemeinsamen Öffnung 15 auf Seiten des Spannschraubenkopfes 4 grenzt eine zu dem Boden 9 hin offene, im radial inneren Endabschnitt des Spannbands 1 ausgebildete Sicke 17 an, an der sich das dem geradlinigen Querrand 9a gegenüberliegende Ende des Bodens 9 in den seitlich neben den Zungen 14 liegenden Randbereichen des Bodens 9 abstützt. Der innere Endabschnitt 7 des Spannbands 1 ist frei von einer radial nach außen gerichteten Kröpfung, wie sie bei bekannten Schneckengewindeschellen zur Aufnahme des Bodens 9 vorgesehen ist.

Die Sicken 16, 17 erstrecken sich in Umfangsrichtung der Schelle, und die radial innere Kante jeder Sicke 16, 17 fluchtet mit der Unterseite des Bodens 9, wobei die Kante stetig in die Innenseite des radial inneren Endabschnitts 7 übergeht. Dadurch ergibt sich ein weitgehend kontinuierlicher Übergang zwischen dem Gehäuseboden 9 und der Innenseite des Spannbands 1 mit entsprechend gleichmäßiger Einspanndruckverteilung über die Umfangsbereiche eines durch die Schneckengewindeschelle auf einem Rohr, Stutzen oder dergleichen festgeklemmten Schlauches neben dem Boden 9 des Gehäuses 2.

An die Sicken 16 grenzen weitere, im radial inneren Endabschnitt 7 des Spannbands 1 ausgebildete Öffnungen 18 an. Diese Öffnungen 18 verhindern ebenso wie die Öffnung 15, daß das Spannband 1 beim Herausdrücken der Sicken 16, 17 einreißt, wenn nur quer zur Bandlängsrichtung verlaufende Schnitte im Spannband 1 ausgebildet würden und die angrenzenden Bandbereiche zur Ausbildung der Sicken 16, 17 herausgedrückt werden.

Das Gehäuse 2 hat nur auf seiner - bei oberhalb des Spannbands 1 liegender Spannschraube 3 in Richtung vom Kopf 4 zum Schaft 5 der Spannschraube 3 gesehen - rechten Seite einen seitlichen Ausleger 19, dessen Wand radial außerhalb des radial äußeren Endabschnitts 6 des Spannbands 1 neben dem freien Ende des Spannschraubenschafts 5 einen von einem gewölbten First 20 oder Oberteil des Gehäuses 2 tangential zu einem radialen Wandteil 21 des Auslegers 19 schräg abfallenden Wandteil 22 aufweist. Ferner hat der Ausleger neben einem mittleren Abschnitt des Spannschraubenschafts 5 einen an diesem anliegenden gewölbten Wandteil 23 und einen den gewölbten Wandteil 23 mit dem radialen Wandteil 21 verbindenden axialen Wandteil 24.

Der gewölbte Wandteil 23 und der axiale Wandteil 24 sind durch Eindrückung der Seitenwand des Gehäuses 2 gebildet. Dabei verbleibt ein quer zur Spannschraube 3 verlaufender Wandteil 25 zwischen dem schräg abfallenden Wandteil 22, dem gewölbten Wandteil 23 und dem axialen Wandteil 24.

Die Ebene des quer verlaufenden Wandteils 25 kreuzt etwa die Mitte des mit dem Spannband 1 in Gewindeeingriff stehenden Abschnitts der Spannschraube 3.

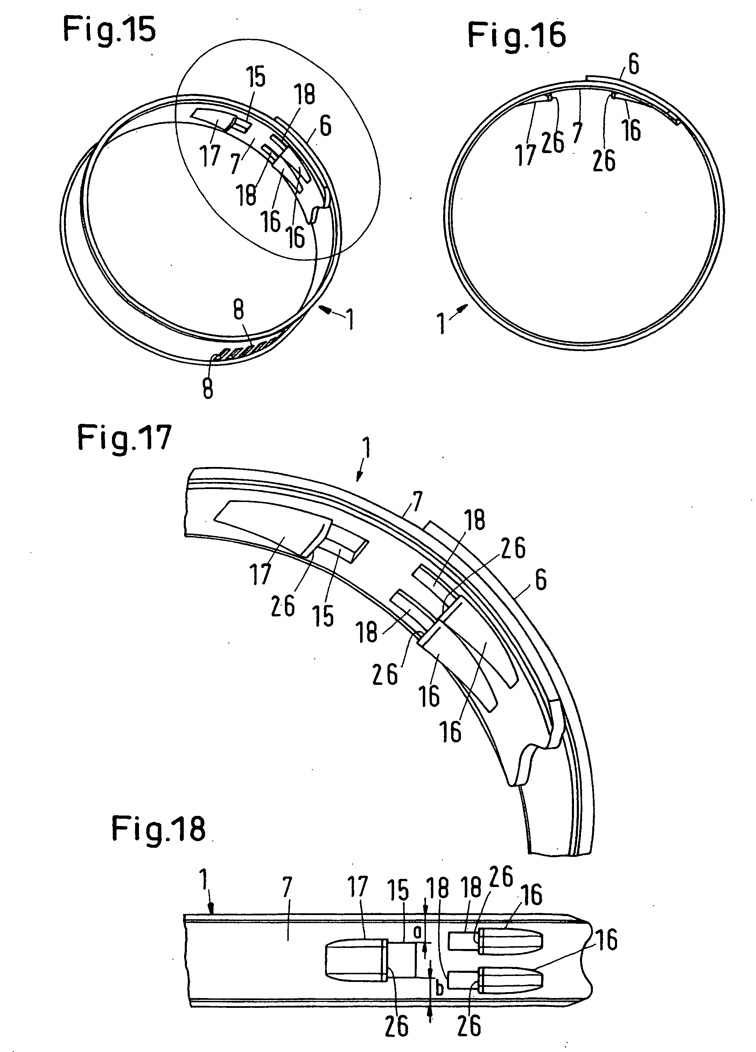

Bei dieser Schneckengewindeschelle stützen sich der Querrand 9a und die diesem gegenüberliegenden Randbereiche des Gehäusebodens 9 beim Spannen oder Entspannen der Schneckengewindeschelle an den radialen Stirnflächen der Öffnungsränder 26 (Fig. 16 bis 18) der Sicken 16 und der Sicke 17 in Umfangsrichtung des Spannbands 1 ab, auf seiten des am stärksten belasteten Querrands 9a mithin an vier Flächen. Die Gesamtstützfläche am Querrand 9a ist mithin größer als bei nur zwei Stützflächen, wie im bekannten Fall (DE 196 33 435 C1), bei dem sich der dem Schraubenkopf 4 abgekehrte Querrand des Gehäusebodens 9 an nur zwei neben dem einen Zungenpaar liegenden Flächen einer das Zungenpaar aufnehmenden Öffnung der Seitenwand der dort im Gehäuseboden ausgebildeten Quernut abstützt. Dementsprechend ist die Flächenpressung auf seiten des am stärksten belasteten Querrandes 9a des Gehäusebodens 9 geringer und die Verbindung zum Gehäuseboden 9 und Spannband 1 mit einer höheren Spannkraft in Umfangsrichtung des Spannbands 1 ohne Materialverformung belastbar. Darüber hinaus tragen die Zungen 14 durch den Eingriff in die Öffnung 15 zum Zusammenhalt der beiden Enden des Gehäusebands 10 im Bereich der Stoßfuge 11 bei. Die in Fig. 4 rechte Zunge 14 wird beim Spannen stärker belastet als die danebenliegende Zunge 14 und ist daher in Querrichtung breiter als die linke Zunge 14 ausgebildet. Ferner ist der Abstand a der die Zungen 14 aufnehmenden Öffnung 15 von dem, vom Kopf 4 zum Schaft 5 der Spannschraube 3 gesehen, rechts von der Spannschraube 3 liegenden Rand des Spannbands 1 kleiner als der Abstand b der Öffnung 15 vom gegenüberliegenden Rand des Spannbands 1. Der zwischen dem einen Längsrand der Öffnung 15 und.dem einen Rand des Spannbands liegende Steg mit der Breite b wird beim spannen des Spannbands 1 aufgrund der Steigung der Gewindeelemente 8 und des Gewindes der Spannschraube 3 stärker auf Zug beansprucht als der Steg mit der Breite a und hat daher aufgrund der Exzentrizität der Öffnung 15 einen stärkeren Querschnitt. Auch im radial inneren Bereich der Öffnungsränder 26 der Sicken 16 und 17 können sich die Querränder des Gehäusebodens 9 in Umfangsrichtung des Spannbands 1 abstützen.

Der Ausleger 19 verhindert ein seitliches Wegkippen des Gehäuses 2 bei einer Rechtsdrehung der Spannschraube 3, während die Schneckengewindeschelle gespannt wird, da die Spannschraube 3 zum einen bestrebt ist, sich mit ihrem Gewindeschaft 5 auf der Oberseite des radial äußeren Endabschnitts 6 abzurollen, und zum anderen durch die schrägen Gewindeelemente 8 mit einer axialen Kraftkomponente zur Seite in Richtung zum Ausleger 19 hin gedrückt wird. Die beim Festziehen der Spannschraube 3 auf die in Fig. 4 linke Gehäusewand ausgeübte Kraft ist zwar bestrebt, den gewölbten Wandteil 23 nach links außen in Fig. 4 aufzubiegen, d.h. zu strecken, doch wird dies durch den axialen Wandteil 24 und den quer verlaufenden Wandteil 25 bis zu sehr hohen Spannkräften verhindert. Obwohl der Spannschraubenkopf 4 mit einem Flansch 27 den einen Öffnungsrand des Gehäuses 2 übergreift (Fig. 5 und 6), um eine Drehung der Spannschraube 3 um eine axiale Querachse beim Spannen zu verhindern, bei der der Spannschraubenkopf 4 bestrebt ist, sich zum Spannband 1 hin zu bewegen, wäre dennoch eine solche Drehung bei sehr hohen Spannkräften nicht ausgeschlossen. Aus diesem Grund ist nicht nur die eine Seitenwand 28 des Gehäuses 2 nahezu eben, d.h. nicht zur Spannschraube 3 hin eingedrückt wie die gegenüberliegende Seitenwand zwischen den Wandteilen 23 und 24, sondern auch der schräg abfallende Wandteil 22 geradlinig, d.h. ohne Eindrückung ausgebildet. Dieser Wandteil 22 sorgt daher zusätzlich dafür, daß sich das Gehäuse 2 zum einen nicht aufweiten und zum anderen dem Drehmoment der Spannschraube 3 um ihre axiale Querachse nicht nachgeben kann.

Darüber hinaus ergibt sich durch den schräg abfallenden Wandteil 22 ein Abstand zwischen einem der Breite des Wandteils 22 in der Länge entsprechenden Endabschnitt des Gewindeschafts 5 der Spannschraube 3 und der Gehäusewand, so daß das Gewinde das Gehäuse im Bereich des schräg abfallenden Wandteils 22 nicht berührt und daher weniger einem Berührungsverschleiß unterliegt. Die Spannschraube 3 ist daher auch nach mehrmaliger Betätigung und Ausübung einer hohen Spannkraft über einen längeren Zeitraum leichtgängig zu betätigen.

Da der quer verlaufende Wandteil 25 des Auslegers 19 weitgehend in der Mitte des mit den Gewindeelementen 8 des Endabschnitts 6 in Eingriff stehenden Abschnitts des Gewindeschafts 5 der Spannschraube 3 liegt, ist dieser am stärksten in Querrichtung belastete Bereich des Gehäuses 2 sehr steif, so daß er auch bei sehr hohen Spannkräften nicht durch die Spannschraube 3 aufgeweitet wird.

Die Ecken 29 (Fig. 12, 13) an dem dem Spannschraubenkopf 4 abgekehrten Gehäuseende sind abgerundet, so daß sie weniger leicht in das eingespannte Schlauchmaterial eindringen und es demzufolge nicht beschädigen.

Der auf seiten des Spannschraubenkopfes 4 liegende Endabschnitt des Gehäuses 2 ist an seinen radial inneren Rändern mit Laschen 30 und 31 versehen, die nach der Einführung der Spannschraube 3 in das Gehäuse 2 unter den gewindefreien Hals der Spannschraube 3 gebogen werden (Fig. 5, 6) und eine Rückbewegung der Spannschraube 3 relativ zum Gehäuse 2 beim Öffnen (Entspannen) der Schneckengewindeschelle durch Rückdrehung der Spannschraube 3 verhindern.

Der dem Kopf 4 der Spannschraube 3 zugekehrte freie Rand des Oberteils des Gehäuses 2 ist mit Zähnen 32 versehen, an denen eine radiale Fläche des Kopfes 4, hier des Flansches 27 des Kopfes 4, anliegt. Wenn die Spannkraft bzw. das Drehmoment der Spannschraube 3 beim Spannen einen vorbestimmten Grenzwert überschreitet, verformen sich die Zähne 32, so daß ihre Kanten in die radiale Fläche des Spannschraubenkopfes 4 eingreifen. Danach steigt die Zugspannung im Spannband 1 deutlich geringer an, auch wenn versucht wird, die Spannkraft bzw. das Drehmoment weiter zu erhöhen, so daß die Gefahr eines Reißens des Bands weitgehend verhindert wird. Bis zum Erreichen dieser vorbestimmten Spannkraft, bevor sich die Zähne 32 verformen, kann die Spannschraube 3 dagegen relativ leichtgängig und weitgehend ungehindert gedreht werden.

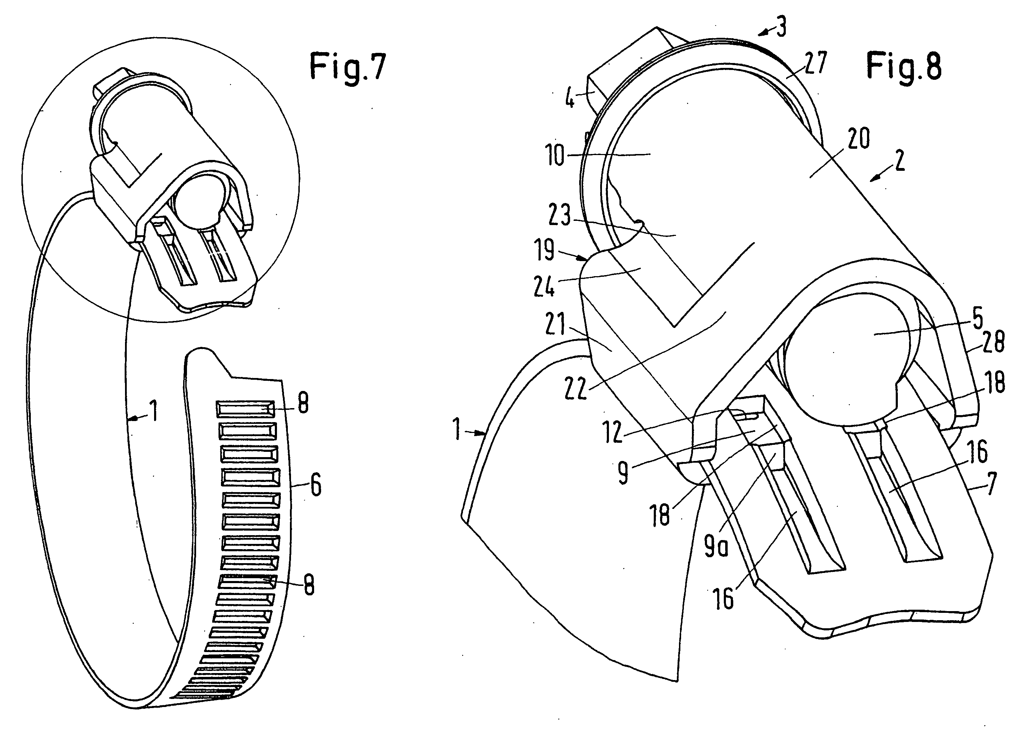

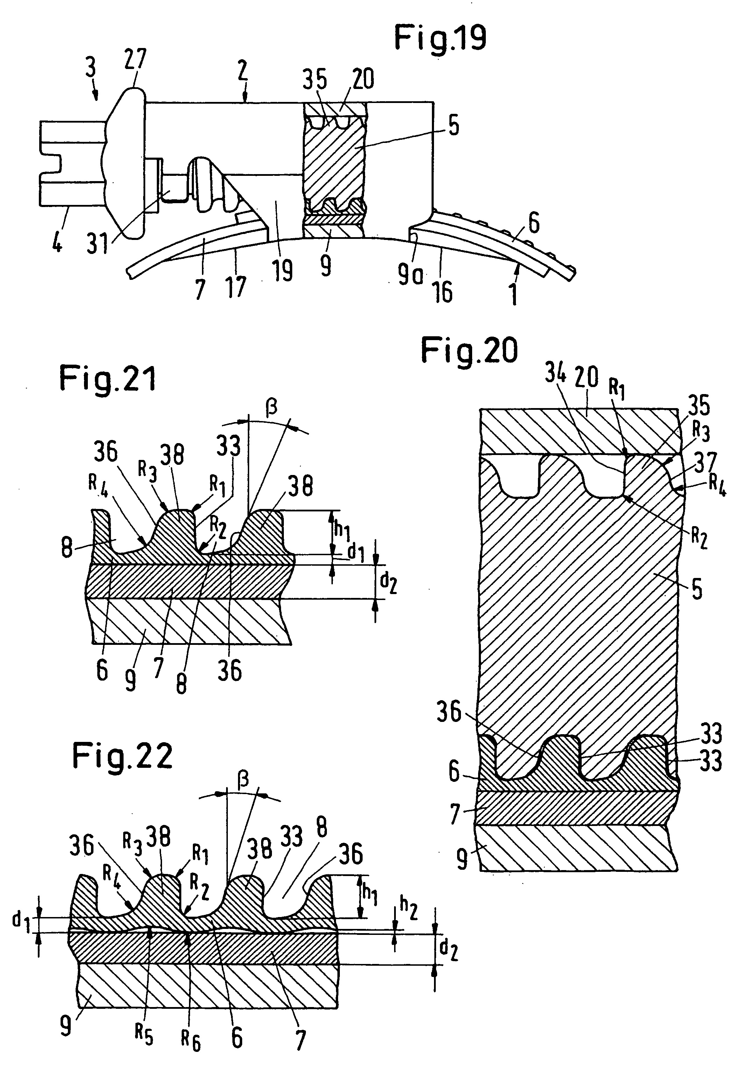

Die Fig. 19 bis 21 zeigen die in den Fig. 5 bis 7 und 8 nur schematisch dargestellten Gewindeelemente 8 und das Gewinde der Spannschraube 3 genauer. Danach haben die beim Spannen des Spannbands 1 durch Anziehen der Spannschraube 3 aneinandergepreßten Flanken 33 , 34 der im Spannband 3 eingeprägten Gewindeelemente 8 und des Gewindestegs 35 der Spannschraube 3 an ihren äußeren und inneren Enden Radien R₁ bzw. R₂. Ferner entspricht die Steilheit dieser Flanken 33, 34 etwa 90°. Die übrigen Flanken 36 und 37 der Gewindeelemente 8 und des Gewindestegs 35 haben an ihren Enden Radien R₃ bzw. R₄, die größer als die Radien R₁ und R₂ sind. Dagegen ist der Radius R₃ am freien Ende der Flanken 36 der Gewindeelemente 8 kleiner als der Radius R₄ am Fußende der Flanken 36, während der Radius R₃ am freien ende der Flanke 37 des Gewindestegs 35 größer als der Radius R₄ am Fußende der Flanke 37 ist. Auch die Radial innere Seite des mit den Gewindeelementen 8 (Fig. 21) versehenen, radial äußeren Endabschnitts 6 des Spannbands 1 ist weitgehend eben. Die Gewindestege 38 zwischen den in Form von Rillen eingeprägten Gewindeelementen 8 haben bei einer Bodendicke d₁ im Bereich von 0,2 bis 0,5 mm und sowie einer Spannbänddicke d₂ im Bereich von 0,6 bis 1 mm eine Höhe h₁ im Bereich von 0,6 bis 1 mm. Die Steilheit der Flanken 33 und 34 entspricht etwa einem Flankenwinkel von 90°, während die Steilheit der Flanken 36 und 37 einem Winkel β von etwa 15° entspricht. Diese Form der Gewindeelemente 8 bzw. Gewindestege 38 im radial äußeren Endabschnitt 6 des Spannbands 1 bzw. die Form des Gewindestegs 35 der Spannschraube 3 hat folgende Vorteile: Die Steilheit der Flanken 33 und 34 stellt sicher, daß der Gewindesteg 35 und die Gewindeelemente 8 - im Gegensatz zu schrägen Flanken, die aneinandergepreßt werden - auch bei sehr hohen Spannkräften nicht durch höhere zusätzliche Radial-Kraftkomponenten außer Eingriff gebracht werden. Die kleinen Radien R₁ und R₂ ergeben in Radialrichtung längere, aneinander anliegende Flanken als größere Radien und demzufolge ebenfalls geringere Radialkraftkomponenten beim Spannen, die bestrebt sind, das Gewinde der Spannschraube 3 und die Gewindeelemente 8 des Spannbands 1 radial auseinanderzudrücken. Die relativ zu den Radien R₁ und R₂ größeren Radien R₃ und R₄ ergeben zum einen eine größere Breite der Gewindestege 38 an ihren freien Enden und an ihrem Fußende, so daß sie entsprechend höher belastbar sind, bevor sie sich verformen würden. Entsprechendes gilt für den zu den Gewindeelementen 8 weitgehend komplementären Gewindesteg 35 der Spannschraube 3. Der kleine Radius R₂ und der größere Radius R₄ haben zudem den Vorteil, daß die entsprechend komplementär geformten, bislang etwa trapezförmigen oder mit einer walmdachartigen Spitze versehenen Zähne des Prägestempels, durch den die Gewindeelemente 8 geprägt werden, eine längere Standzeit haben, da die nahezu keilförmigen Zähne des Prägestempels sich leichter in das Material des Spannbands 1 drücken lassen. Als günstige Werte der Radien R₁ bis R₄ bei den genannten Maximalwerten von h₁ haben sich folgende erwiesen:
R₁ = 0,25 mm
R₂ = 0,3 mm
R₃ = 0,7 mm
R₄ = 0,5 mm

Die weitgehend ebene radial innere Seite des mit der Gewindeprägung versehenen Endabschnitts 6 des Spannbands 1 im Vergleich zu einer Prägung, bei der auch die radial innere Seite des Endabschnitts 6 in nahezu gleicher Weise wie die radial äußere Seite durch Verwendung eines entsprechenden unteren Prägestempels beim Prägen geformt wird, hat den Vorteil, daß die zwischen dem geprägten Abschnitt des Spannbands und dem mittels der Schneckengewindeschelle auf einem Rohrstutzen eingespannten Schlauch durch Erschütterungen, insbesondere beim Einsatz der Schneckengewindeschelle in Kraftfahrzeugen, auftretende Reibung weitgehend vermieden ist.

Das Ausführungsbeispiel nach Fig. 22 stellt eine im Vergleich zu der in den Fig. 19 bis 21 dargestellten Prägung des Endabschnitts 6 des Spannbands 1 etwas abgewandelte Prägung dar. So ist bei diesem Ausführungsbeispiel die radial innere Seite des Endabschnitts 6 nicht eben, sondern leicht gewellt, und zwar weitgehend symmetrisch, wobei die Minima der Wellung mit denen der Gewindeelemente 8 und die Maxima der Wellung mit denen der Gewindestege 38 quasi synchron zusammenfallen. Dagegen sind die Radien R₅ der Maxima und R₆ der Minima der inneren Wellung erheblich größer als die der äußeren Wellung und die Höhe h₂ der inneren Wellung sehr viel kleiner als die Höhe h₁ der äußeren Wellung. So gelten für die Radien R₅ und R₆ sowie die Höhe h₂, bei ansonsten gleichen Werten der übrigen Maße wie bei dem Ausführungsbeispiel nach den Fig. 19 bis 21, vorzugsweise etwa folgende Werte:
R₅ = 2 mm
R₆ = 2 mm
h₂ = 0,1 bis 0,3 mm

Die Maße hängen im einzelnen ab vom Nenndurchmesser der Schneckengewindeschelle bzw. des einzuspannenden Schlauches, von der Spannbandbreite und vom Spannbandwerkstoff. Die leichte Wellung der radial inneren Seite des Endabschnitts 6 des Spannbands 1 ist hinsichtlich der Reibung nahezu vernachlässigbar, hat jedoch den Vorteil, daß die Bodendicke d₁ etwas größer als bei dem vorhergehenden Ausführungsbeispiel behalten werden kann, weil bei gleicher Höhe h₁ der Gewindestege 38 und gleicher Banddicke d₂ wie bei dem vorhergehenden Ausführungsbeispiel die freien Enden der Gewindestege 38 höher liegen, so daß das die Gewindeelemente 8 und Stege 38 prägende Werkzeug nicht so tief in das Bandmaterial einzudringen und demzufolge auch den Boden zwischen den Gewindestegen 38 nicht so weit zu verdichten braucht. Dies führt zu einer erheblichen Steigerung der Standzeit dieses Prägewerkzeugs im Vergleich zu dem die Gewindeelemente 8 und Gewindestege 38 bei dem vorhergehenden Ausführungsbeispiel prägenden Werkzeug.

## Patentansprüche

1. Schneckengewindeschelle mit einem Spannband (1), einem Gehäuse (2) und einer einen Kopf (4) und einen Gewindeschaft (5) aufweisenden Spannschraube (3), wobei das Spannband (1) sich überlappende Endabschnitte (6, 7) aufweist, von denen der radial äußere mit Gewindeelementen (8) versehen ist, die mit dem Gewindeschaft (5) in Eingriff stehen, und der radial innere Endabschnitt (7) mit einem Boden (9) des die Endabschnitte (6, 7) und den Gewindeschaft (5) der Spannschraube (3) umgebenden Gehäuses (2), das die Spannschraube (3) in beiden Umfangsrichtungen der Schelle abstützt, formschlüssig verbunden ist, wobei das Gehäuse (2) aus einem Gehäuseband (10) besteht, dessen Enden im Bereich des Bodens (9) eine Stoßfuge (11) begrenzen und miteinander durch ineinandergreifende Hinterschneidungen (12, 13) ihrer die Stoßfuge (11) begrenzenden Ränder verbunden sind, wobei der Boden (9) des Gehäuses (2) an seinem dem Spannschraubenkopf (4) zugekehrten Rand beiderseits der Stoßfuge (11) je eine von zwei radial nach außen umgebogenen Zungen (14) aufweist, die gemeinsam in eine Öffnung (15) im radial inneren Endabschnitt (7) des Spannbands (1) ragen, wobei der dem Kopf (4) der Spannschraube (3) abgekehrte Querrand (9a) des Bodens (9) des Gehäuses (2) durchgehend geradlinig ist und sich an zu diesem Querrand (9a) hin offenen, radial nach innen aus dem Spannband (1) herausgedrückten Sicken (16) abstützt, **dadurch gekennzeichnet daß** an der den Zungen (14) gemeinsamen Öffnung (15) auf Seiten des Spannschraubenkopfes (4) eine zu dem Boden (9) hin offene Sicke (17) im Spannband (1) angrenzt, an der sich der Boden (9) abstützt, daß der innere Endabschnitt (7) des Spannbands (1) frei von einer radial nach außen gerichteten Kröpfung zur Aufnahme des Bodens (9) ist, daß sich die Sicken (16, 17) in Umfangsrichtung der Schelle erstrecken und die radial innere Kante jeder Sicke (16, 17) mit der Unterseite des Bodens (9) fluchtet und stetig in die Innenseite des radial inneren Endabschnitts (7) übergeht.

2. Schneckengewindeschelle nach Anspruch 1, **dadurch gekennzeichnet, daß** das Spannband (1) in seiner radial äußeren Seite eine Reihe schräg zur Längsrichtung des Spannbands (1) verlaufender paralleler Rillen als Gewindeelemente (8) für den Eingriff des Gewindes der Spannschraube (3) aufweist und seine radial innere Seite eben bis leicht gewellt ist, wobei die maximale Höhe (h₂) der Wellung bis zu 60% der maximalen Bodendicke (d₁) der Gewindeelemente (8) beträgt.

3. Schneckengewindeschelle nach Anspruch 2, **dadurch gekennzeichnet, daß** die beim Spannen des Spannbands (1) aneinandergepreßten Flanken (33, 34) der Gewindeelemente (8) des Spannbands (1) und des Gewindestegs (35) der Spannschraube (3) an ihren äußeren und inneren Enden mit Radien (R₁, R₂) versehen sind und ihre Flankensteilheit bei gestrecktem Spannband (1) etwa 90° entspricht, und daß die übrigen Flanken (36, 37) der Gewindeelemente (8) und des Gewindestegs (35) an ihren Enden mit größeren Radien (R₃, R₄) als die Enden der aneinandergepreßten Flanken (33, 34) versehen sind und eine geringere Flankensteilheit (β) als die aneinandergepreßten Flanken (33, 34) haben.

4. Schneckengewindeschelle nach Anspruch 3, **dadurch gekennzeichnet, daß** die Radien (R₁, R₂) an den Enden der beim Spannen der Spannschraube (3) aneinandergepreßten Flanken (33, 34) weitgehend gleich sind und bei den übrigen Flanken (36, 37) der Radius (R₃) am freien Ende der Flanken (36) der Gewindeelemente (8) kleiner als der Radius (R₄) an den Fußenden und am freien Ende der Flanke (37) des Gewindestegs (35) der Radius (R₃) größer als der Radius (R₄) am Fußende ist.

5. Schneckengewindeschelle nach einem der Ansprüche 1 bis 4, **dadurch gekennzeichnet, daß** das Gehäuse (2) nur auf seiner, bei oberhalb des Spannbands (1) liegender Spannschraube (3) in Richtung vom Kopf (4) zum Schaft (5) der Spannschraube (3) gesehen, rechten Seite einen seitlichen Ausleger (19) aufweist, dessen Wand radial außerhalb des radial äußeren Endabschnitts (6) des Spannbands (1) neben dem freien Ende des Spannschraubenschafts (5) einen von einem gewölbten First (20) des Gehäuses (2) tangential zu einem radialen Wandteil (21) des Auslegers (19) schräg abfallenden Wandteil (22) und neben einem mittleren Abschnitt des Spannschraubenschafts (5) einen an diesem anliegenden gewölbten Wandteil (23) und einen den gewölbten Wandteil (23) mit dem radialen Wandteil (21) verbindenden axialen Wandteil (24) aufweist.

6. Schneckengewindeschelle nach Anspruch 5, **dadurch gekennzeichnet, daß** der gewölbte Wandteil (23) und der axiale Wandteil (24) durch Eindrückung der Seitenwand des Gehäuses (2) gebildet sind, so daß ein quer zur Spannschraube (3) verlaufender Wandteil (25) zwischen dem schräg abfallenden Wandteil (22), dem gewölbten Wandteil (23) und dem axialen Wandteil (24) verbleibt.

7. Schneckengewindeschelle nach Anspruch 6, **dadurch gekennzeichnet, daß** die Ebene des quer verlaufenden Wandteils (25) etwa die Mitte des mit dem Spannband (1) in Gewindeeingriff stehenden Abschnitts der Spannschraube (3) kreuzt.

8. Schneckengewindeschelle nach einem der Ansprüche 1 bis 7, **dadurch gekennzeichnet, daß** der dem Kopf (4) der Spannschraube (3) zugekehrte freie Rand des Oberteils des Gehäuses (2) mit Zähnen (32) versehen ist, an denen eine quer zur Schraubenachse stehende radiale Fläche des Kopfes (4) anliegt.

9. Schneckengewindeschelle nach Anspruch 6, **dadurch gekennzeichnet, daß** der Boden (9) des Gehäuses (2) in Umfangsrichtung der Schelle eine Krümmung aufweist, deren Krümmungsradius dem des Umfangs eines mittels der Schelle auf einem Rohr festgeklemmten Schlauches weitgehend entspricht, daß der Boden (9) in der Umfangsrichtung kürzer als das Oberteil des Gehäuses (2) ist und eine solche Lage relativ zum freien Ende der Spannschraube (3) hat, daß die größtmögliche Anzahl von Gewindeabschnitten der Spannschraube (3) mit (den) im Spannband eingeprägten Gewindeelementen (8) in Eingriff steht.

10. Schneckengewindeschelle nach einem der Ansprüche 1 bis 9, **dadurch gekennzeichnet, daß** der Abstand (a) der die Zungen (14) aufnehmenden Öffnung (15) von dem, vom Kopf (4) zum Schaft (5) der Spannschraube (3) gesehen, rechts von der Spannschraube (3) liegenden Rand des Spannbands (1) kleiner als der Abstand (b) der Öffnung (15) vom gegenüberliegenden Rand des Spannbands (1) ist.

11. Schneckengewindeschelle nach einem der Ansprüche 1 bis 10, **dadurch gekennzeichnet, daß** der dem Kopf (4) der Spannschraube (3) zugekehrte Rand des Gehäusebodens (9) zu den Zungen (14) und in Richtung zum Kopf (4) schräg vorsteht.

## Claims

1. Worm drive hose clip comprising a clamping strap (1), a housing (2), and a clamping screw (3) comprising a head (4) and a threaded shaft (5), the clamping strap (1) having overlapping end sections (6, 7), the radially outwardly positioned one of the end sections being provided with thread elements (8) which engage the threaded shaft (5), and the radially inwardly positioned end section (7) being positive-lockingly connected with a bottom (9) of the housing (2) surrounding the end sections (6, 7) and the threaded shaft (5) of the clamping screw (3), the housing supporting the clamping screw (3) in both circumferential directions of the clip, the housing (2) consisting of a housing band (10) whose ends delimit a butt joint (11) in the area of the bottom (9) of the housing and are connected with one another by interlocking undercuts (12, 13) provided at their edges delimiting the butt joint (11), the bottom (9) of the housing (2) being provided on a border facing the clamping screw head (4) and on both sides of the butt joint (11) with one of two tongues (14), respectively, that are radially outwardly bent and project together into an opening (15) in the radially inner end section (7) of the clamping strap (1), wherein the transverse border (9a) of the bottom (9) of the housing (2) facing away from the head (4) of the clamping screw has a continuous straight configuration and is supported on grooves (16) that are open toward this transverse border (9a) and pressed radially inwardly out of the clamping strap, **characterised in that** a groove (17) open toward the bottom (9) adjoins in the clamping strap (1) the opening (15) that is common to the tongues (14) and provided on the side of the clamping screw head (4), wherein the bottom (9) is supported on this groove (17); **in that** the inner end section (7) of the clamping strap (1) is free of a radially outwardly oriented folded portion for receiving the bottom (9); and **in that** the grooves (16, 17) extend in the circumferential direction of the clip and the radially inner edge of each groove (16, 17) is aligned with the underside of the bottom (9) and has a continuous transition into the inner side of the radially inner end section (7).

2. Worm drive hose clip according to claim 1, **characterised in that** the clamping strap (1) in its radially outer side has a series of parallel grooves arranged slantedly relative to the longitudinal direction of the clamping strap and forming thread elements (8) for the engagement of the thread of the clamping screw (3) and that its radially inner side is planar or slightly undulated wherein the maximum height (h₂) of the undulation is up to 60 % of the maximum bottom thickness (d₁) of the thread elements (8).

3. Worm drive hose clip according to claim 2, **characterised in that** the flanks (33, 34) of the thread elements (8) of the clamping strap (1) and of the thread stay (35) of the clamping screw (3), which flanks are pressed against one another during clamping, are provided at their outer and inner ends with curved portions of certain radii (R₁, R₂) and **in that** the steepness of their flanks in a stretched out state of the clamping strap (1) is approximately 90° and **in that** the other flanks (36, 37) of the thread elements (8) and of the thread stay (35) at their ends have greater radii (R₃, R₄) than the ends of the flanks (33, 34) pressed against one another and have a reduced steepness (β) of the flanks in comparison to the flanks (33, 34) that are pressed against one another.

4. Worm drive hose clip according to claim 3, **characterised in that** the radii (R₁, R₂) at the ends of the flanks (33, 34) pressed against one another during tightening of the clamping screw (3) are substantially identical and with the other flanks (36, 37) the radius (R₃) at the free end of the flanks (36) of the thread elements (8) is smaller than the radius (R₄) at the foot ends, while at the free end of the flank (37) of the thread stay (35) the radius (R₃) is greater than the radius (R₄) at the foot end.

5. Worm drive hose clip according to any of the claims 1 to 4, **characterised in that** the housing (2) comprises a lateral bracket (19) only on its right side, when viewing in the direction from the head (4) to the shaft (5) of the clamping screw (3), and the clamping screw is positioned above the clamping strap, the wall of the bracket being provided radially outside of the radially outer end section (6) of the clamping strap (1), adjacent to the free end of the clamping screw shaft (5), with a wall portion (22) that slantedly descends from a curved ridge (20) of the top part of the housing (2) tangentially to a radial wall portion (21) of the bracket (19) and, adjacent to a central section of the clamping screw shaft (5), with a curved wall portion (23), resting against the central section of the clamping screw shaft, and an axial wall portion (24) connecting the curved wall portion (23) with the radial wall portion (21).

6. Worm drive hose clip according to claim 5, **characterised in that** the curved wall portion (23) and the axial wall portion (24) are formed by impressing the sidewall of the housing (2) so that a wall portion (25) extending transversely to the clamping screw (3) remains between the slantedly descending wall portion (22), the curved wall portion (23), and the axial wall portion (24).

7. Worm drive hose clip according to claim 6, **characterised in that** the plane of the transversely extending wall portion (25) crosses approximately the center of the section of the clamping screw (3), which center is in thread engagement with the clamping strap (1).

8. Worm drive hose clip according to any of the claims 1 to 7, **characterised in that** the free edge of the top part of the housing (2), which edge is facing the head (4) of the clamping screw, is provided with teeth (32) on which a radial surface of the head, which surface is positioned transversely to the screw axis, is positioned.

9. Worm drive hose clip according to claim 6, **characterised in that** the bottom (9) of the housing (2) in the circumferential direction of the clip has a curvature whose radius of curvature corresponds substantially to that of the circumference of a hose clamped by means of the clip on a pipe; that the bottom (9) in the circumferential direction is shorter than the top part of the housing (2) and has such a position relative to the free end of the clamping screw (3) that the greatest possible number of thread sections of the clamping screw (3) is in engagement with the thread elements (8) provided by embossing in the clamping strap.

10. Worm drive hose clip according to any of the claims 1 to 9, **characterised in that** the spacing (a) of the opening (15) receiving the tongues from that edge of the clamping strap (1), which is positioned to the right of the clamping screw (3), when viewed from the head (4) to the shaft (5) of the clamping screw (3), is smaller than the spacing (b) of the opening (15) from the opposite edge of the clamping strap (1).

11. Worm drive hose clip according to any of the claims 1 to 10, **characterised in that** the border of the housing bottom (9), which border is facing the head (4) of the clamping screw (3), is projecting in the direction toward the head (5) at a slant relative to the tongues.

## Revendications

1. Collier de serrage à vis tangente comprenant une bande de serrage (1), un boîtier (2) et une vis de serrage (3) présentant une tête (4) et une tige filetée (5), dans lequel :
- la bande de serrage (1) présente des tronçons terminaux (6, 7) qui se superposent et dont le tronçon radialement extérieur est muni d'éléments à pas de vis (8) qui sont en engagement avec la tige filetée (5), et dont le tronçon terminal radialement intérieur (7) est relié par coopération de formes à un fond (9) du boîtier (2) entourant les tronçons terminaux (6, 7) et la tige filetée (5) de la vis de serrage (3) et soutenant la vis de serrage (3) dans les deux directions circonférentielles du collier ;
- le boîtier (2) se compose d'une bande de boîtier (10) dont les extrémités limitent un joint d'aboutement (11) dans la région du fond (9) et sont reliées l'une à l'autre par des contre-dépouilles (12, 13) s'engageant l'une dans l'autre, de leurs bordures limitant le joint d'aboutement (11) ;
- le fond (9) du boîtier (2) présente, sur chacun des deux côtés du joint d'aboutement (11) sur sa bordure tournée vers la tête de la vis de serrage (4), des languettes (14) cintrées radialement une fois sur deux vers l'extérieur, qui dépassent conjointement dans une ouverture (15) dans le tronçon terminal radialement intérieur (7) de la bande de serrage (1) ; et
- la bordure transversale (9a) du fond (9) du boîtier (2), détournée de la tête (4) de la vis de serrage (3), est continuellement en ligne droite et s'appuie sur des moulures (16) ouvertes vers cette bordure transversale (9a) et pressées radialement vers l'intérieur à partir de la bande de serrage (1),
**caractérisé en ce que** :
- dans la bande de serrage (1), une moulure (17) ouverte vers le fond (9) est adjacente à l'ouverture (15) commune aux languettes (14) sur des côtés de la tête de la vis de serrage (4), moulure sur laquelle s'appuie le fond (9) ;
- le tronçon terminal intérieur (7) de la bande de serrage (1) est exempt d'un coudage dirigé radialement vers l'extérieur pour recevoir le fond (9) ; et
- les moulures (16, 17) s'étendent en direction circonférentielle du collier et la bordure radialement intérieure de chaque moulure (16, 17) est en alignement avec la face inférieure du fond (9) et se transforme de manière continue dans la face intérieure du tronçon terminal radialement intérieur (7).

2. Collier de serrage à vis tangente selon la revendication 1, **caractérisé en ce que** la bande de serrage (1) présente dans son côté radialement extérieur une rangée de rainures parallèles s'étendant en biais par rapport à la direction longitudinale de la bande de serrage (1), à titre d'éléments à pas de vis (8), pour l'engagement du filetage de la vis de serrage (3) et **en ce que** son côté radialement intérieur a une structure entre plane et légèrement ondulée, la hauteur maximale (h₂) de l'ondulation se montant jusqu'à 60% de l'épaisseur maximale du fond (d₁) des éléments à pas de vis (8).

3. Collier de serrage à vis tangente selon la revendication 2, **caractérisé en ce que** :
- les flancs (33, 34) des éléments à pas de vis (8) de la bande de serrage (1) et de la nervure filetée (35) de la vis de serrage (3), lesdits flancs étant pressés les uns contre les autres lors du serrage de la bande de serrage (1), sont munis sur leurs extrémités extérieures et intérieures de rayons (R₁, R₂) et leur pente de flanc correspond approximativement à 90° lorsque la bande de serrage (1) est tendue ; et
- les autres flancs (36, 37) des éléments à pas de vis (8) et de la nervure filetée (35) sont munis sur leurs extrémités de rayons (R₃, R₄) qui sont plus grands que ceux des extrémités des flancs (33, 34) pressés les uns contre les autres et ont une pente de flanc (β) plus petite que celle des flancs (33, 34) pressés les uns contre les autres.

4. Collier de serrage à vis tangente selon la revendication 3, **caractérisé en ce que** les rayons (R₁, R₂) sur les extrémités des flancs (33, 34) pressés les uns contre les autres lors du serrage de la bande de serrage (1) sont largement identiques et **en ce que**, pour les autres flancs (36, 37), le rayon (R₃) à l'extrémité libre des flancs (36) des éléments à pas de vis (8) est plus petit que le rayon (R₄) aux extrémités de pied et **en ce que** le rayon (R₃) à l'extrémité libre du flanc (37) de la nervure filetée (35) est plus grand que le rayon (R₄) à l'extrémité de pied.

5. Collier de serrage à vis tangente selon l'une des revendications 1 à 4, **caractérisé en ce que**, lorsque la vis de serrage (3) est disposée au-dessus de la bande de serrage (1), le boîtier (2) présente seulement sur son côté droit, en regardant dans la direction de la tête (4) vers la tige (5) de la vis de serrage (3), une console latérale (19) dont la paroi présente, en dehors du tronçon terminal radialement extérieur (6) de la bande de serrage (1) à côté de l'extrémité libre de la tige (5) de la vis de serrage, une partie de paroi (22) tombant en biais depuis un faîte cintré (20) du boîtier (2) tangentiellement à une partie de paroi radiale (21) de la console (19) et présente, à côté d'un tronçon médian de la tige (5) de la vis de serrage, une partie de paroi cintrée (23) venant s'appliquer sur celle-ci et une partie de paroi axiale (24) qui relie la partie de paroi cintrée (23) à la partie de paroi radiale (21).

6. Collier de serrage à vis tangente selon la revendication 5, **caractérisé en ce que** la partie de paroi cintrée (23) et la partie de paroi axiale (24) sont formées par enfoncement de la paroi latérale du boîtier (2) de sorte qu'une partie de paroi (25) transverse à la vis de serrage (3) reste entre la partie de paroi (22) tombant en biais, la partie de paroi cintrée (23) et la partie de paroi axiale (24).

7. Collier de serrage à vis tangente selon la revendication 6, **caractérisé en ce que** le plan de la partie de paroi (25) transverse croise approximativement au milieu le tronçon de la vis de serrage (3) qui engrène avec la bande de serrage (1).

8. Collier de serrage à vis tangente selon l'une des revendications 1 à 7, **caractérisé en ce que** la bordure libre de la partie supérieure du boîtier (2), tournée vers la tête (4) de la vis de serrage (3), est munie de dents (32) sur lesquelles vient s'appliquer une surface radiale de la tête (4) disposée transversalement à l'axe de la vis.

9. Collier de serrage à vis tangente selon la revendication 6, **caractérisé en ce que** :
- le fond (9) du boîtier (2) présente en direction circonférentielle du collier une courbure dont le rayon de courbure correspond largement à celui de la circonférence d'un tuyau flexible fixé sur un tube au moyen du collier ; et
- le fond (9) est plus court dans la direction circonférentielle que la partie supérieure du boîtier (2) et occupe une position telle par rapport à l'extrémité libre de la vis de serrage (3) que le plus grand nombre possible de tronçons filetés de la vis de serrage (3) sont en engagement avec des (les) éléments à pas de vis (8) empreints dans la bande de serrage.

10. Collier de serrage à vis tangente selon l'une des revendications 1 à 9, **caractérisé en ce que** la distance (a) de l'ouverture (15) qui reçoit les languettes (14) depuis la bordure de la bande de serrage (1) placée à droite de la vis de serrage (3), en regardant de la tête (4) vers la tige (5) de la vis de serrage (3), est plus petite que la distance (b) de l'ouverture (15) depuis la bordure opposée de la bande de serrage (1).

11. Collier de serrage à vis tangente selon l'une des revendications 1 à 10, **caractérisé en ce que** la bordure du fond de boîtier (9) tournée vers la tête (4) de la vis de serrage (3) est en saillie vers les languettes (14) et en biais en direction de la tête (4).
